# EUROPEAN PATENT APPLICATION

(11) **EP 4 708 378 A1**
(43) Date of publication of application: **11.03.2026**
(21) Application number: 25198316.9
(22) Date of filing: 27.08.2025
(51) Int. Cl.: H01M 4/131, H01M 4/36, H01M 4/505, H01M 4/52, H01M 4/525, H01M 4/62, H01M 4/66, H01M 10/0525, H01M 4/48

(54) **ANODE MATERIAL FOR SECONDARY BATTERY, ANODE FOR SECONDARY BATTERY AND SECONDARY BATTERY**

(30) Priority: 28.08.2024 US 202463687785 P; 04.08.2025 TW 114129548
(71) Applicant: Enext Technology Co., Ltd., Hsinchu City 30013 (TW)
(72) Inventor: Yew, Tri-Rung, 300043 Hsinchu City (TW); Wu, Shao-Yun, 266004 Sanxing Township, Yilan County (TW); Chen, Hsin-Nan, 710053 Tainan City (TW); Wu, Cheng-Heng, 300037 Hsinchu City (TW); Huang, Cheng-Liang, 912019 Neipu Township, Pingtung County (TW)
(74) Representative: Becker Kurig & Partner Patentanwälte mbB

(57) **Abstract**

An anode material for a secondary battery, an anode for a secondary battery and a secondary battery are provided. The anode material for the secondary battery includes a plurality of oxide particles and a protection layer. The protection layer covers the plurality of oxide particles, and the material of the protection layer includes carbon.

## Description

### BACKGROUND

### Technical Field

The present invention relates to an electrode material, an electrode, and a battery, and more particularly to an anode material for a secondary battery, an anode for a secondary battery, and a secondary battery.

### Description of Related Art

In recent years, the market demand for secondary lithium batteries that can be repeatedly charged and discharged and with the features of lightweight, high voltage value and high energy density has increased rapidly. Therefore, current requirements for secondary lithium batteries, such as lightweight, durability, high voltage, high energy density and high safety, are becoming increasingly more and more demanding. The secondary lithium batteries have very high potential in the application and expandability of light electric vehicles, electric vehicles, and large power storage industry. Generally, the most common commercial electrode material is graphite, but the capacity of graphite (theoretical value is 372 mAh/g) is low, so the performance of batteries made from it is limited. Therefore, finding an electrode material for secondary batteries with high stability and high capacity is one of the goals that those skilled in the art want to achieve.

### SUMMARY

In view of this, the present invention provides an anode material and an anode for a secondary battery that enables the secondary battery to have good capacity and stability.

An anode material for a secondary battery provided by an embodiment of the present invention includes a plurality of oxide particles and a protective layer. The protective layer covers the plurality of oxide particles, and the material of the protective layer includes carbon.

An anode for a secondary battery provided by an embodiment of the present invention includes a current collector and an anode material layer. The anode material layer is disposed on the current collector and includes the anode material for the secondary battery as described above.

A secondary battery provided by an embodiment of the present invention includes a cathode, an anode, an electrolyte, and a package structure. The anode is disposed separately from the cathode, and is the anode for the secondary battery as described above. The electrolyte is placed between the anode and the cathode. The package structure covers the anode, cathode and electrolyte.

Based on the above, the anode material for the secondary battery of the present invention comprises the plurality of oxide particles covered with the protective layer comprising carbon, such that the anode material for a secondary battery of the present invention can not only be used in the anode of the secondary battery, but also enables the secondary battery to have good capacity, stability, and charge-discharge cycle life.

In order to make the above features and advantages of the present invention more clearly understood, embodiments are given below with reference to the accompanying drawings for detailed description.

### BRIEF DESCRIPTION OF THE DRAWINGS

FIG. 1 is a schematic diagram of an anode material according to an embodiment of the present invention.
FIG. 2 is a schematic diagram of an anode material according to another embodiment of the present invention.
FIG. 3 is a schematic cross-sectional view of a secondary battery according to an embodiment of the present invention.
FIG. 4 is a cycle life curve diagram of the secondary batteries of Example 1 and Comparative Example 1.
FIG. 5 is a cycle life curve diagram of the secondary batteries of Example 2 and Comparative Example 2.
FIG. 6 is a cycle life curve diagram of the secondary batteries of Example 3 and Comparative Example 3.
FIG. 7 is a cycle life curve diagram of the secondary batteries of Example 4 and Comparative Example 4.
FIG. 8 is a cycle life curve diagram of the secondary batteries of Example 5 and Comparative Example 5.

### DESCRIPTION OF THE EMBODIMENTS

In the specification, scopes represented by "a numerical value to another numerical value" are schematic representations in order to avoid listing all of the numerical values in the scopes in the specification. Therefore, the recitation of a specific numerical range covers any numerical value in the numerical range and a smaller numerical range defined by any numerical value in the numerical range, as is the case with any numerical value and a smaller numerical range thereof in the specification.

As used herein, "about," "approximately," "essentially" or "substantially" is inclusive of the stated value and means within an acceptable range of deviation for the particular value as determined by persons of ordinary skill in the art, considering the measurement in question and the error associated with measurement of the particular quantity (i.e., the limitations of the measurement system). For example, "about" may mean within one or more standard deviations, or within, for example, ±30%, ±20%, ±15%, ±10%, ±5% of the stated value. Moreover, a relatively acceptable range of deviation or standard deviation may be chosen for the term "about," "approximately," "essentially" or "substantially" as used herein based on measurement properties or other properties, instead of applying one standard deviation across all the properties.

In order to prepare an anode material that can be applied to an anode of a secondary battery and make the secondary battery have good stability and capacity, the present invention provides an anode material that can achieve the above advantages. Hereinafter, specific embodiments are described as examples according to which the present invention can surely be implemented.

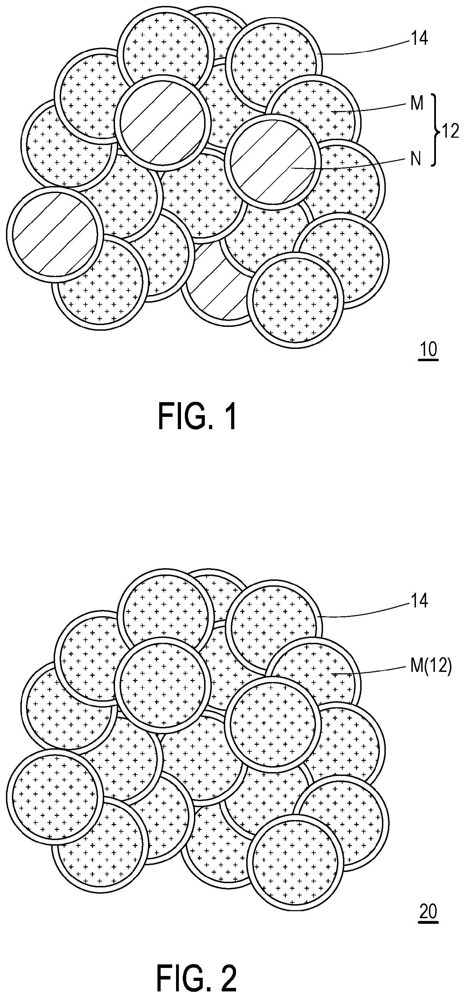

FIG. 1 is a schematic diagram of an anode material according to an embodiment of the present invention.

Referring to FIG. 1, an anode material 10 of the present embodiment includes a plurality of oxide particles 12 and a protective layer 14 covering the plurality of oxide particles 12. Specifically, the plurality of oxide particles 12 include a plurality of first oxide particles M and a plurality of second oxide particles N. That is, in the present embodiment, the plurality of oxide particles 12 may include two different oxide groups.

In the present embodiment, the material of the plurality of first oxide particles M includes one or more of FeO, Fe₂O₃, Fe₃O₄, Al_{y}Fe_{1-y}O, Al_{y}Fe_{2-y}O₃, Al_{y}Fe_{3-y}O₄, Ti_{y}Fe_{1-y}O, Ti_{y}Fe_{2-y}O₃, Ti_{y}Fe_{3-y}O₄, MnO, Mn₂O₃, Mn₃O₄, MnO₂, Al_{y}Mn_{1-y}O, Al_{y}Mn_{2-y}O₃, Al_{y}Mn_{1-y}O₂, Al_{y}Mn_{3-y}O₄, Ti_{y}Mn_{1-y}O, Ti_{y}Mn_{2-y}O₃, Ti_{y}Mn_{1-y}O₂, Ti_{y}Mn_{3-y}O₄, Ca_{y}Mn_{1-y}O, Ca_{y}Mn_{2-y}O₃, Ca_{y}Mn_{1-y}O₂, Ca_{y}Mn_{3-y}O₄, and (AlₐZn_{b}Mn_{c}Fe_{d}Cuₑ)₃O₄, wherein y≤20 atomic%, each of a, b, c, d and e is greater than or equal to 10 atomic%, and a+b+c+d+e=1. That is, the material of the plurality of first oxide particles M may include an iron-containing oxide, a manganese-containing oxide, or a high-entropy oxide (HEO).

Specifically, in the present embodiment, the iron-containing oxide may exist in a normal form (i.e., FeO, Fe₂O₃, Fe₃O₄, etc., which are oxides composed only of iron (Fe) and oxygen (O)), or may be a multi-element metal oxide containing other metals such as Al and Ti; and the manganese-containing oxide may exist in a normal form (i.e., oxides composed only of manganese (Mn) and oxygen (O), such as MnO, Mn₂O₃, Mn₃O₄, and MnO₂), or may be a multi-element metal oxide including other metals such as Al, Ti, and Ca. It is worth mentioning that by including the plurality of first oxide particles M, which may be iron-containing oxide and/or manganese-containing oxide, in the secondary battery using the anode material 10 to form the anode, lithium ions can migrate in and out through different pathways, thereby reducing the polarization effect and improving the charge-discharge cycle life. As a result, the capacity of the secondary battery using the anode material 10 including the plurality of first oxide particles M can be significantly increased.

In addition, in the present embodiment, (AlₐZn_{b}Mn_{c}Fe_{d}Cuₑ)₃O₄ has a spinel structure. It is worth mentioning that the (AlₐZn_{b}Mn_{c}Fe_{d}Cuₑ)₃O₄ in the material of the plurality of first oxide particles M has the above-mentioned structure, which allows for the presence of more oxygen vacancies. Therefore, in the secondary battery using the anode material 10 including the plurality of first oxide particles M, lithium ions can be easily and quickly moved in and out, thereby effectively improving the lithium ion diffusion rate and ionic conductivity.

In the present embodiment, the material of the plurality of second oxide particles N includes one or more of SiO₂, SnO₂, TiO₂, CuO₂, CuO, CaO, ZnO and MoO₃. Specifically, the plurality of second oxide particles N are mainly composed of a binary oxide, that is, an oxide mainly composed of one metal or metalloid element and oxygen (O). It is worth mentioning that by using the anode material 10 including the plurality of second oxide particles N to make the anode, lithium ions can migrate in and out through different pathways, thereby reducing the polarization effect and improving the charge-discharge cycle life. As a result, the capacity of the secondary battery using the anode material 10 including the plurality of second oxide particles N can be significantly increased. In addition, the plurality of second oxide particles N can also serve as a separation layer in the anode material 10 to prevent collapse during the redox reaction, thereby improving the structural stability of the anode made from the anode material 10 and increasing the charge-discharge cycle life of the battery.

In the present embodiment, the atomic proportion of the plurality of first oxide particles M is greater than or equal to 90 atomic %, and the atomic proportion of the plurality of second oxide particles N is less than or equal to 10 atomic %. That is, among the plurality of oxide particles 12, the content of the first oxide particle M is significantly higher than that of the second oxide particle N.

In the present embodiment, the particle size of the plurality of first oxide particles M is between 20 nm or more and 20 µm or less, and the particle size of the plurality of second oxide particles N is between 20 nm or more and 20 µm or less. If the particle sizes of the plurality of first oxide particles M and the plurality of second oxide particles N fall within the above ranges, it is possible to form a anode with good characteristics. In one embodiment, in order to obtain the plurality of first oxide particles M and the plurality of second oxide particles N having the aforementioned specific particle size ranges, grinding may be performed using a mortar, a ball mill, a 3D ball mill, a vibrating ball mill, or a planetary ball mill, but the present invention is not limited thereto.

In the present embodiment, the material of the protection layer 14 includes carbon. Specifically, the carbon used in the protection layer 14 includes one or more of defective carbon, conductive carbon, amorphous carbon, nitrogen-doped carbon, and boron-doped carbon. In addition, in the present embodiment, the thickness of the protective layer 14 is less than or equal to 20 nm. If the thickness of the protective layer 14 falls within the above range, the carbon-containing protective layer 14 can serve as a good transfer channel for lithium ions and electrons, thereby effectively improving the charge-discharge cycle life and high-rate charge-discharge capability of the battery. It is worth mentioning that the protective layer 14 covering the surfaces of the plurality of oxide particles 12 (i.e., the plurality of first oxide particles M and the plurality of second oxide particles N) can act on the solid electrolyte interface (SEI) to prevent further reaction between the plurality of first oxide particles M and the electrolyte solution, and further reaction between the plurality of second oxide particles N and the electrolyte solution, and serve as a diffusion channel for lithium ions to undergo redox reactions inside the plurality of first oxide particles M and the plurality of second oxide particles N. As a result, the charge-discharge cycle life of the secondary battery using the anode material 10 including the protective layer 14 covering the plurality of oxide particles 12 can be improved. In addition, the protective layer 14 can be used to protect the plurality of first oxide particles M from structural damage caused by volume expansion during the redox reaction, thereby improving the structural stability of the anode made from the anode material 10 and increasing the charge-discharge cycle life of the battery. Furthermore, by including the protective layer 14 containing carbon, the anode material 10 can have a better electron conduction path, thereby promoting the efficient transfer of electrons generated by the reaction and helping to reduce charge polarization during the charge and discharge cycle.

Although the material of the plurality of oxide particles 12 in the anode material 10 may be selected from two different oxide groups, the present invention is not limited thereto. Referring to FIG. 2, in other embodiments, the plurality of oxide particles 12 in the anode material 20 may also only include a plurality of first oxide particles M. That is, the material of the plurality of oxide particles 12 in the anode material 20 is selected from only a single oxide group.

In one embodiment, the method of manufacturing the anode material 10 or the anode material 20 may include the following steps. First, the particle sizes of the plurality of oxide particles 12 are adjusted so that the particle sizes thereof tend to be consistent. Specifically, the particle sizes of the first oxide particles M and the second oxide particles N are adjusted so that the particle sizes of the first oxide particles M and the second oxide particles N respectively fall within the aforementioned ranges. In one embodiment, the plurality of first oxide particles M or the plurality of second oxide particles N may be ground using a mortar, a ball mill, a 3D ball mill, a vibration ball mill, or a planetary ball mill to adjust the particle size, but the present invention is not limited thereto.

Next, the plurality of oxide particles 12 having uniform particle sizes are mixed. Since the anode material 20 only includes the plurality of first oxide particles M, this step may be omitted. In one embodiment, the method of mixing the plurality of first oxide particles M and the plurality of second oxide particles N may include a physical dry mixing method or a physical wet mixing method.

Thereafter, the plurality of oxide particles 12 are aggregated through particle aggregation. In one embodiment, a drying method or a granulation method may be used to perform particle aggregation.

Furthermore, the protective layer 14 is formed on the surfaces of the plurality of oxide particles 12 to form the anode material 10 or the anode material 20. In one embodiment, the protective layer 14 may be formed by thermal evaporation, chemical vapor deposition (CVD), physical vapor deposition (PVD), atomic layer deposition (ALD), plasma deposition, hydrothermal method, sol-gel method, or spin-coating. In one embodiment, the carbon source that may be used to form the protective layer 14 may include glucose, sucrose, furfuryl alcohol, citric acid, polyacrylonitrile (PAN), polyvinylidene fluoride (PVDF), polyvinyl chloride (PVC), polyvinylpyrrolidone (PVP), pyromellitic acid, dopamine hydrochloride, etc.

Another embodiment of the present invention further provides a secondary battery, which uses any of the anode materials (i.e., the anode material 10 or the anode material 20) provided in the aforementioned embodiments.

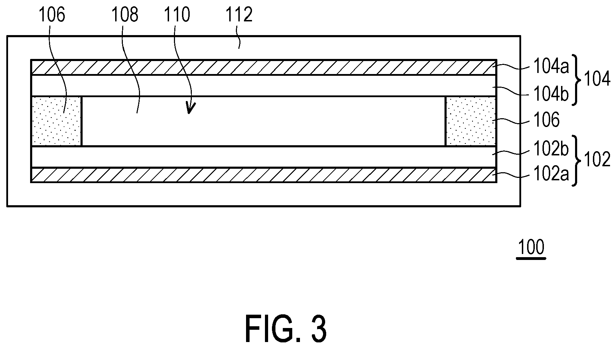

FIG. 3 is a schematic cross-sectional view of a secondary battery according to an embodiment of the present invention. Please refer to FIG. 3, a secondary battery 100 may include an anode 102, a cathode 104, an electrolyte 108, and a package structure 112. In the present embodiment, the secondary battery 100 may include a separator 106. In addition, in the present embodiment, the secondary battery 100 may be a lithium-ion battery.

In the present embodiment, the anode 102 may include a current collector 102a and an anode material layer 102b disposed on the current collector 102a. In the present embodiment, the current collector 102a may be a metal foil (e.g., copper foil, aluminum foil, molybdenum foil, nickel foil), a molybdenum-coated copper foil, a molybdenum-coated nickel foil, a molybdenum-coated aluminum foil, a carbon nanotube-coated copper foil, a carbon nanotube-coated nickel foil, or a carbon nanotube-coated aluminum foil. In the present embodiment, the thickness of the current collector 102a may be between about 5 µm and about 300 µm.

In the present embodiment, the anode material layer 102b includes any of the anode materials proposed in the above embodiments (i.e., the anode material 10 or the anode material 20). In the present embodiment, the anode material may be disposed on the current collector 102a by, for example, coating, sputtering, hot pressing, sintering, physical vapor deposition, or chemical vapor deposition.

In addition, in the present embodiment, the anode material layer 102b may further include a conductive agent mixed with the anode material. In the present embodiment, the conductive agent may be carbon nanotubes, graphene, graphite (such as natural graphite, artificial graphite), or conductive carbon (such as VGCF, Super P, KS4, KS6, or ECP). Specifically, the conductive agent is used to improve the electrical contact between the molecules of the anode material.

In addition, in the present embodiment, the anode material layer 102b may further include a binder. In the present embodiment, the binder may be sodium carboxymethyl cellulose (CMC), styrene butadiene rubber (SBR), polyvinylidene fluoride (PVDF), polyamide, melamine resin, or a combination thereof. In detail, the anode material may be adhered to the current collector 102a by the binder.

In the present embodiment, the cathode 104 is arranged separately from the anode 102. In the present embodiment, the cathode 104 includes a current collector 104a and a cathode material layer 104b disposed on the current collector 104a. In the present embodiment, the current collector 104a may be a metal foil (e.g., copper foil, nickel foil, molybdenum foil, aluminum foil, or highly conductive stainless steel foil), a molybdenum-coated copper foil, a molybdenum-coated nickel foil, a molybdenum-coated aluminum foil, a carbon nanotube-coated copper foil, a carbon nanotube-coated nickel foil, or a carbon nanotube-coated aluminum foil. In the present embodiment, the thickness of the current collector 104a may be between about 5 µm and about 300 µm.

In the present embodiment, the cathode material layer 104b includes a cathode material. In the present embodiment, the cathode material may include lithium cobalt oxide (LiCoO₂), lithium manganate (LiMn₂O₄), lithium nickelate (LiNiO₂), lithium iron phosphate (LiFePO₄), lithium nickel cobalt manganese oxide (e.g., NMC811, NMC622, or NMC532), lithium manganese iron phosphate (LiMnₓFe₁₋ₓPO₄, 0<x<1, LMFP), or a combination thereof. In the present embodiment, the cathode material may be disposed on the current collector 104a by, for example, coating, sputtering, hot pressing, sintering, physical vapor deposition, or chemical vapor deposition. In addition, in the present embodiment, the cathode material layer 104b may further include a binder. In the present embodiment, the binder may be PVDF, SBR, polyamide, melamine resin, or a combination thereof. In detail, the cathode material may be adhered to the current collector 104a by the binder.

In the present embodiment, the electrolyte 108 is disposed between the anode 102 and the cathode 104. The electrolyte 108 may include a liquid electrolyte, a gel electrolyte, a molten salt electrolyte, or a solid electrolyte.

In the present embodiment, the separator 106 is disposed between the anode 102 and the cathode 104. The separator 106, the anode 102, and the cathode 104 define a housing region 110, and the electrolyte 108 is disposed in the housing region 110. In the present embodiment, the separator 106 may be made of an insulating material, such as polyethylene (PE), polypropylene (PP), or a composite structure composed of the above materials (e.g., PE/PP/PE). In the present embodiment, the secondary battery 100 includes the separator 106 to isolate the anode 102 and the cathode 104 and allow ions to penetrate therethrough, but the present invention is not limited thereto. In other embodiments, the electrolyte 108 is a solid electrolyte, and the secondary battery 100 does not include a separator.

In the present embodiment, the package structure 112 covers the anode 102, the cathode 104 and the electrolyte 108. In the present embodiment, the material of the package structure 112 is, for example, aluminum foil, aluminum-plastic film, or stainless steel.

In the present embodiment, the structure of the secondary battery 100 is not limited to that shown in FIG. 1. In other embodiments, the secondary battery 100 may have a roll-type structure in which an anode, a cathode, and a separator provided as needed are wound, or a laminated structure formed by laminating flat layers. In the present embodiment, the secondary battery 100 is, for example, a paper-type battery, a button-type battery, a coin-type battery, a laminated battery, a cylindrical battery, or a rectangular battery.

It is particularly noted that the anode 102 of the secondary battery 100 uses any of the anode materials proposed in the aforementioned embodiments. Therefore, as described above, the secondary battery 100 can have good capacity, stability, and charge-discharge cycle life.

Hereinafter, the features of the present invention will be described in more detail with reference to Examples 1 to 5 and Comparative Examples 1 to 5. Although the following Examples 1 to 5 are described, the materials used, the amount and ratio of each thereof, as well as the detailed process flow, etc. can be suitably modified without departing from the scope of this disclosure. Therefore, the scope of this disclosure should not be limited by the following examples.

### Example 1

### Preparation of anode material

At room temperature, Fe₂O₃ powder (first oxide particles M) and SnO₂ powder (second oxide particles N) were ground and physically wet-mixed with water using a ball mill to form a slurry. The mixed slurry was then dried to form a powder with aggregated particles so as to form the oxide particles of Example 1, wherein the particle sizes of first oxide particle M and second oxide particle N were both 10 µm. In a high-temperature furnace, the temperature was firstly raised to 100°C and maintained for 2 hours to evaporate the water vapor. Next, the temperature was raised to 600°C and maintained for more than 5 hours. The purpose of the said step was to form amorphous carbon (protective layer) on the surfaces of the oxide particles of Example 1 by thermal evaporation using glucose as a gas source, wherein the heating rate of all heating processes was 5°C/min. Then, the temperature was lowered to room temperature to obtain the anode material of Example 1, wherein the thickness of the protective layer was 5 nm, the atomic proportion of the first oxide particles M was 95%, and the atomic proportion of the second oxide particles N was 5%.

### Preparation of secondary battery

The anode material of Example 1, Super P conductive carbon, and a binder (sodium carboxymethyl cellulose (CMC) and styrene butadiene rubber (SBR)) were dissolved in water and mixed at a weight ratio of 7:2:1 to form a mixture. Next, a high-speed mixer (manufactured by Gelon Corporation; model: GN-VM-7P) was used to mix the mixture at a rotation speed of 2000 rpm for about 30 minutes to form an anode slurry. Next, a spatula (100 µm) was used to apply the said slurry onto a copper foil (current collector of the anode) evenly, and then the copper foil applied with the slurry was placed in a vacuum oven to dry at about 100°C for about 12 hours. Afterwards, the dried copper foil was cut into the anode of Example 1 with a diameter of about 14 mm using a cutting machine.

A button-type battery (model: CR2032) was assembled, which uses the anode of Example 1 as the anode, NMC622 (14 mm of diameter) as the cathode, lithium salt LiPF₆ dissolved in a mixture of ethylene carbonate (EC) and diethyl carbonate (DEC) (volume ratio EC:DEC = 1:1) as the electrolyte with a concentration of 1 M, a polypropylene film (trade name: Celgard #2400, manufactured by Celgard) as the separator, and a stainless steel 304 or 316 cover as the package structure. Thus, the secondary battery of Example 1 was prepared, wherein the amount of electrolyte added to each battery was 35 µL.

### Example 2

### Preparation of anode material

At room temperature, Fe₂O₃ powder (first oxide particles M) and CaO powder (second oxide particles N) were ground and physically wet-mixed with water using a ball mill to form a slurry. The mixed slurry was then dried to form a powder with aggregated powders so as to form the oxide particles of Example 2, wherein the particle sizes of first oxide particle M and second oxide particle N were both 10 µm. In a high-temperature furnace, the temperature was firstly raised to 100°C and maintained for 2 hours to evaporate the water vapor. Next, the temperature was raised to 600°C and maintained for more than 5 hours. The purpose of the said step was to form amorphous carbon (protective layer) on the surfaces of the oxide particles of Example 2 by thermal evaporation using glucose as a gas source, wherein the heating rate of all heating processes was 5°C/min. Thereafter, the temperature was lowered to room temperature to obtain the anode material of Example 2, wherein the thickness of the protective layer was 5 nm, the atomic proportion of the first oxide particles M was 95%, and the atomic proportion of the second oxide particles N was 5%.

### Preparation of secondary battery

The anode material of Example 2, Super P conductive carbon, and a binder (CMC and SBR) were dissolved in water and mixed at a weight ratio of 7:2:1 to form a mixture. Next, a high-speed mixer (manufactured by Gelon Corporation; model: GN-VM-7P) was used to mix the mixture at a rotation speed of 2000 rpm for about 30 minutes to form an anode slurry. Next, a spatula (100 µm) was used to apply the said slurry onto a copper foil (current collector of the anode) evenly, and then the copper foil applied with the slurry was placed in a vacuum oven to dry at about 100°C for about 12 hours. Afterwards, the dried copper foil was cut into the anode of Example 2 with a diameter of about 14 mm using a cutting machine.

A button-type battery (model: CR2032) was assembled, which uses the anode of Example 2 as the working electrode, lithium metal as the counter electrode (thickness 0.2 mm), lithium salt LiPF₆ dissolved in a mixture of EC and DEC (volume ratio EC:DEC = 1:1) as the electrolyte with a concentration of 1 M, a polypropylene film (trade name: Celgard #2400, manufactured by Celgard) as the separator, and a stainless steel 304 or 316 cover as the package structure. Thus, the secondary battery of Example 2 was prepared, wherein the amount of electrolyte added to each battery was 35 µL.

### Example 3

### Preparation of anode material

At room temperature, MnO powder (first oxide particles M) was ground and physically wet-mixed with water using a ball mill to form a slurry. The mixed slurry was then dried to form a powder with aggregated particles, thereby forming the oxide particles of Example 3, wherein the particle size of the first oxide particle M was 10 µm. In a high-temperature furnace, the temperature was firstly raised to 100°C and maintained for 2 hours to evaporate the water vapor. Next, the temperature was raised to 600°C and maintained for more than 5 hours. The purpose of the said step was to form amorphous carbon (protective layer) on the surfaces of the oxide particles of Example 3 by thermal evaporation using glucose as a gas source, wherein the heating rate of all heating processes was 5°C/min. Thereafter, the temperature was lowered to room temperature to obtain the anode material of Example 3, wherein the thickness of the protective layer was 5 nm.

### Preparation of secondary battery

The anode material of Example 3, Super P conductive carbon, and a binder (CMC and SBR) were dissolved in water and mixed at a weight ratio of 7:2:1 to form a mixture. Next, a high-speed mixer (manufactured by Gelon Corporation; model: GN-VM-7P) was used to mix the mixture at a rotation speed of 2000 rpm for about 30 minutes to form an anode slurry. Next, a spatula (100 µm) was used to apply the said slurry onto a copper foil (current collector of the anode) evenly, and then the copper foil applied with the slurry was placed in a vacuum oven to dry at about 100°C for about 12 hours. Afterwards, the dried copper foil was cut into the anode of Example 3 with a diameter of about 14 mm using a cutting machine.

A button-type battery (model: CR2032) was assembled, which uses the anode of Example 3 as the working electrode, lithium metal as the counter electrode (thickness 0.2 mm), lithium salt LiPF₆ dissolved in a mixture of EC and DEC (volume ratio EC:DEC = 1:1) as the electrolyte with a concentration of 1 M, a polypropylene film (trade name: Celgard #2400, manufactured by Celgard) as the separator, and a stainless steel 304 or 316 cover as the package structure. Thus, the secondary battery of Example 3 was prepared, wherein the amount of electrolyte added to each battery was 35 µL.

### Example 4

### Preparation of anode material

At room temperature, MnO powder (first oxide particles M) and CuO powder (second oxide particles N) were ground and physically wet-mixed with water using a ball mill to form a slurry. The mixed slurry was then dried to form a powder with aggregated powders so as to form the oxide particles of Example 4, wherein the particle sizes of first oxide particle M and second oxide particle N were both 10 µm. In a high-temperature furnace, the temperature was firstly raised to 100°C and maintained for 2 hours to evaporate the water vapor. Next, the temperature was raised to 600°C and maintained for more than 5 hours. The purpose of the said step was to form amorphous carbon (protective layer) on the surfaces of the oxide particles of Example 4 by thermal evaporation using glucose as a gas source, wherein the heating rate of all heating processes was 5°C/min. Thereafter, the temperature was lowered to room temperature to obtain the anode material of Example 4, wherein the thickness of the protective layer was 5 nm, the atomic proportion of the first oxide particles M was 90%, and the atomic proportion of the second oxide particles N was 10%.

### Preparation of secondary battery

The anode material of Example 4, Super P conductive carbon, and a binder (CMC and SBR) were dissolved in water and mixed at a weight ratio of 7:2:1 to form a mixture. Next, a high-speed mixer (manufactured by Gelon Corporation; model: GN-VM-7P) was used to mix the mixture at a rotation speed of 2000 rpm for about 30 minutes to form an anode slurry. Next, a spatula (100 µm) was used to apply the said slurry onto a copper foil (current collector of the anode) evenly, and then the copper foil applied with the slurry was placed in a vacuum oven to dry at about 100°C for about 12 hours. Afterwards, the dried copper foil was cut into the anode of Example 4 with a diameter of about 14 mm using a cutting machine.

A button-type battery (model: CR2032) was assembled, which uses the anode of Example 4 as the working electrode, lithium metal as the counter electrode (thickness 0.2 mm), lithium salt LiPF₆ dissolved in a mixture of EC and DEC (volume ratio EC:DEC = 1:1) as the electrolyte with a concentration of 1 M, a polypropylene film (trade name: Celgard #2400, manufactured by Celgard) as the separator, and a stainless steel 304 or 316 cover as the package structure. Thus, the secondary battery of Example 4 was prepared, wherein the amount of electrolyte added to each battery was 35 µL.

### Example 5

### Preparation of anode material

At room temperature, Al₂O₃ powder (aluminum-containing precursor), ZnO powder (zinc-containing precursor), MnO powder (manganese-containing precursor), Fe₂O₃ powder (iron-containing precursor), and CuO powder (copper-containing precursor) were ground separately using a ball mill. The resulted powders were then mixed and pressed into a green pellet with a diameter of about 1 cm. The green pellet was placed in a high temperature furnace (temperature 900°C) to obtain (AlₐZn_{b}Mn_{c}Fe_{d}Cuₑ)₃O₄ powder (first oxide particles M), wherein a was 15 atomic%, b was 15 atomic%, c was 27.5 atomic%, d was 27.5 atomic% and e was 15 atomic%. Next, the (AlₐZn_{b}Mn_{c}Fe_{d}Cuₑ)₃O₄ powder (first oxide particles M) was ground and physically wet-mixed with water using a ball mill to form a slurry. The mixed slurry was then dried into a powder with aggregated particles so as to form the oxide particles of Example 5, wherein the particle size of the first oxide particle M was 10 µm. Next, in a high-temperature furnace, the temperature was raised to 100°C and maintained for 2 hours to evaporate the water vapor. Next, the temperature was raised to 600°C and maintained for more than 5 hours. The purpose of the said step was to form amorphous carbon (protective layer) on the surfaces of the oxide particles of Example 5 by thermal evaporation using glucose as a gas source, wherein the heating rate of all heating processes was 5°C/min. Thereafter, the temperature was lowered to room temperature to obtain the anode material of Example 5, wherein the thickness of the protective layer was 5 nm.

### Preparation of secondary battery

The anode material of Example 5, Super P conductive carbon, and a binder (CMC and SBR) were dissolved in water and mixed at a weight ratio of 7:2:1 to form a mixture. Next, a high-speed mixer (manufactured by Gelon Corporation; model: GN-VM-7P) was used to mix the mixture at a rotation speed of 2000 rpm for about 30 minutes to form an anode slurry. Next, a spatula (100 µm) was used to apply the said slurry onto a copper foil (current collector of the anode) evenly, and then the copper foil applied with the slurry was placed in a vacuum oven to dry at about 100°C for about 12 hours. Afterwards, the dried copper foil was cut into the anode of Example 5 with a diameter of about 14 mm using a cutting machine.

A button-type battery (model: CR2032) was assembled, which uses the anode of Example 5 as the working electrode, lithium metal as the counter electrode (thickness 0.2 mm), lithium salt LiPF₆ dissolved in a mixture of EC and DEC (volume ratio EC:DEC = 1:1) as the electrolyte with a concentration of 1 M, a polypropylene film (trade name: Celgard #2400, manufactured by Celgard) as the separator, and a stainless steel 304 or 316 cover as the package structure. Thus, the secondary battery of Example 5 was prepared, wherein the amount of electrolyte added to each battery was 35 µL.

### Comparative Example 1

### Preparation of anode material

The anode material of Comparative Example 1 was prepared in the same manner as Example 1, with the difference being mainly that the anode material of Comparative Example 1 did not include a protective layer. That is, the anode material of Comparative Example 1 only included the plurality of oxide particles, wherein the atomic proportion of the first oxide particles M (Fe₂O₃) was 95%, and the atomic proportion of the second oxide particles N (SnO₂) was 5%.

### Preparation of secondary battery

The secondary battery of Comparative Example 1 was prepared according to the same preparation procedure as Example 1, with the difference being mainly that: in the secondary battery of Example 1, the anode was the anode of Example 1; while in the secondary battery of Comparative Example 1, the anode was the anode of Comparative Example 1 made using the anode material of Comparative Example 1.

### Comparative Example 2

### Preparation of anode material

The anode material of Comparative Example 2 was prepared in the same manner as Example 2, with the difference being mainly that the anode material of Comparative Example 2 did not include a protective layer. That is, the anode material of Comparative Example 2 only included the plurality of oxide particles, wherein the atomic proportion of the first oxide particles M (Fe₂O₃) was 95%, and the atomic proportion of the second oxide particle N (CaO) was 5%.

### Preparation of secondary battery

The secondary battery of Comparative Example 2 was prepared according to the same preparation procedure as Example 2, with the difference being mainly that: in the secondary battery of Example 2, the anode of Example 2 was used as the working electrode; while in the secondary battery of Comparative Example 2, the working electrode was the anode of Comparative Example 2 made using the anode material of Comparative Example 2.

### Comparative Example 3

### Preparation of anode material

The anode material of Comparative Example 3 was prepared in the same manner as Example 3, with the difference being mainly that the anode material of Comparative Example 3 did not include a protective layer. That is, the anode material of Comparative Example 3 only included the plurality of oxide particles (i.e., the first oxide particles M (MnO)).

### Preparation of secondary battery

The secondary battery of Comparative Example 3 was prepared according to the same preparation procedure as Example 3, with the difference being mainly that: in the secondary battery of Example 3, the working electrode was the anode of Example 3; while in the secondary battery of Comparative Example 3, the working electrode was the anode of Comparative Example 3 made using the anode material of Comparative Example 3.

### Comparative Example 4

### Preparation of anode material

The anode material of Comparative Example 4 was prepared in the same manner as Example 4, with the difference being mainly that the anode material of Comparative Example 4 did not include a protective layer. That is, the anode material of Comparative Example 4 only included the plurality of oxide particles, wherein the atomic proportion of the first oxide particles M (MnO) was 90%, and the atomic proportion of the second oxide particles N (CuO) was 10%.

### Preparation of secondary battery

The secondary battery of Comparative Example 4 was prepared according to the same preparation procedure as Example 4, with the difference being mainly that: in the secondary battery of Example 4, the working electrode was the anode of Example 4; while in the secondary battery of Comparative Example 4, the working electrode was the anode of Comparative Example 4 made using the anode material of Comparative Example 4.

### Comparative Example 5

### Preparation of anode material

The anode material of Comparative Example 5 was prepared in the same manner as Example 5, with the difference being mainly that the anode material of Comparative Example 5 did not include a protective layer. That is, the anode material of Comparative Example 5 only included the plurality of oxide particles (i.e., first oxide particles M ((AlₐZn_{b}Mn_{c}Fe_{d}Cuₑ)₃O₄)).

### Preparation of secondary battery

The secondary battery of Comparative Example 5 was prepared according to the same preparation procedure as Example 5, with the difference being mainly that: in the secondary battery of Example 5, the working electrode was the anode of Example 5; while in the secondary battery of Comparative Example 5, the working electrode was the anode of Comparative Example 5 made using the anode material of Comparative Example 5.

After the secondary batteries of Examples 1 to 5 and the secondary batteries of Comparative Examples 1 to 5 were prepared, a charge-discharge cycle test was performed on each of the secondary batteries of Examples 1 to 5 and the secondary batteries of Comparative Examples 1 to 5.

### Charge-discharge cycle test

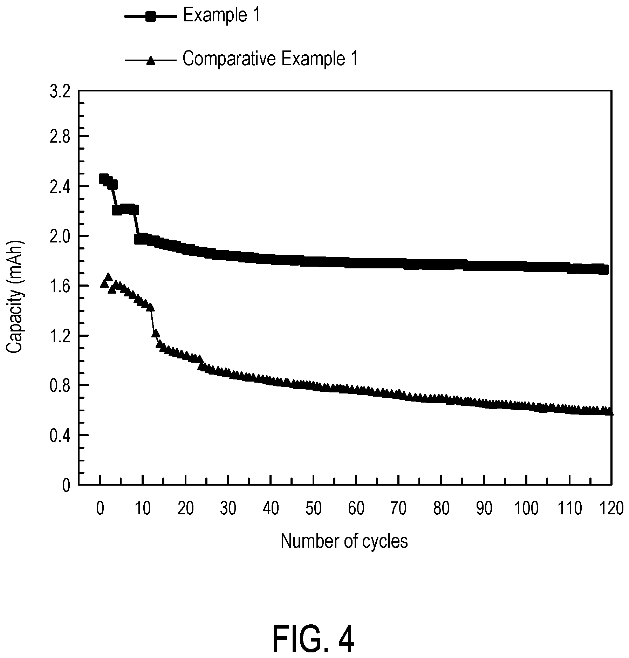

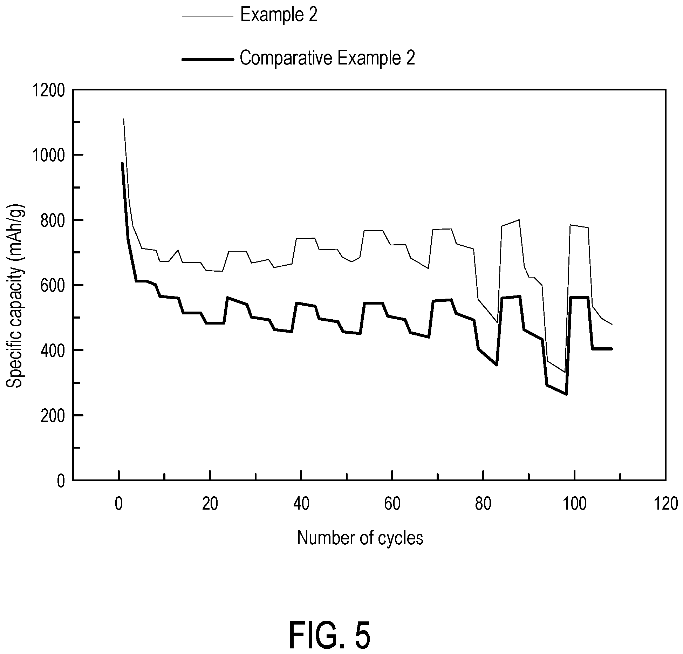

Each of the secondary battery of Example 1 and the secondary battery of Comparative Example 1 was subjected to a battery cycle life capacity test at a voltage of 1.1 V to 3.9 V under an environment of about 15°C to about 30°C. The measurement results are shown in FIG. 4. Each of the secondary batteries of Examples 2 to 5 and the secondary batteries of Comparative Examples 2 to 5 was subjected to a battery cycle life capacity test at a voltage of 0.01 V to 3 V under an environment of about 15°C to about 30°C. The measurement results are shown in FIG. 5 to FIG. 8.

As shown in FIG. 4, compared with the secondary battery of Comparative Example 1, the secondary battery of Example 1 has better capacity and capacity retention after a high number of cycles (about 120 cycles).

As shown in FIG. 5, compared with the secondary battery of Comparative Example 2, the secondary battery of Example 2 has better capacity and capacity retention after a high number of cycles (>100 times).

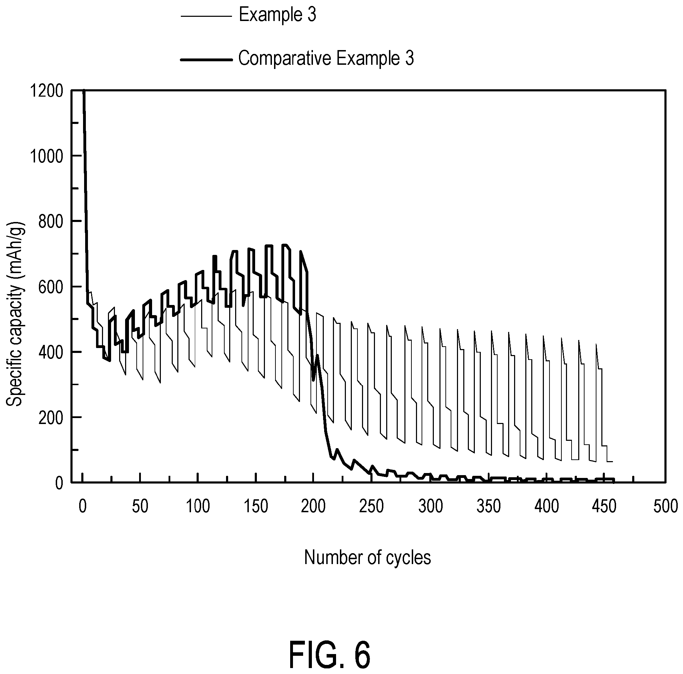

As shown in FIG. 6, compared with the secondary battery of Comparative Example 3, the secondary battery of Example 3 has better capacity and capacity retention after a high number of cycles (> 400 times).

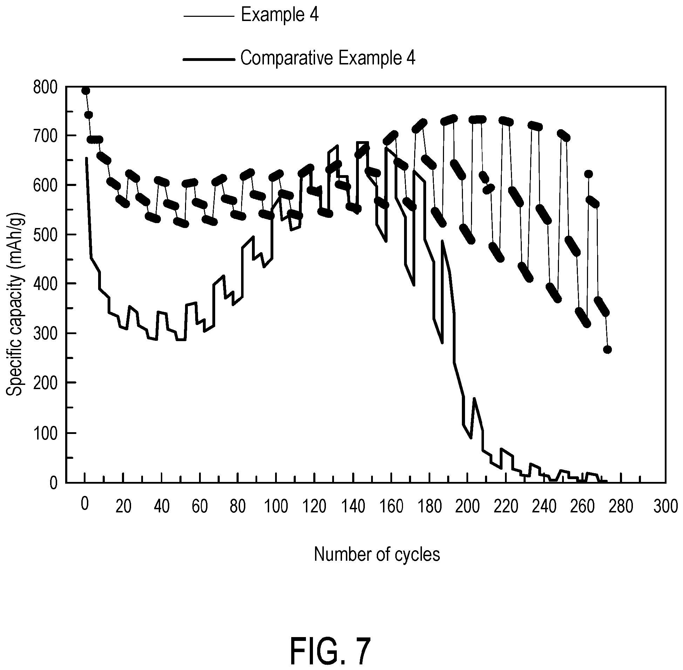

As shown in FIG. 7, compared with the secondary battery of Comparative Example 4, the secondary battery of Example 4 has better capacity and capacity retention after a high number of cycles (> 250 times).

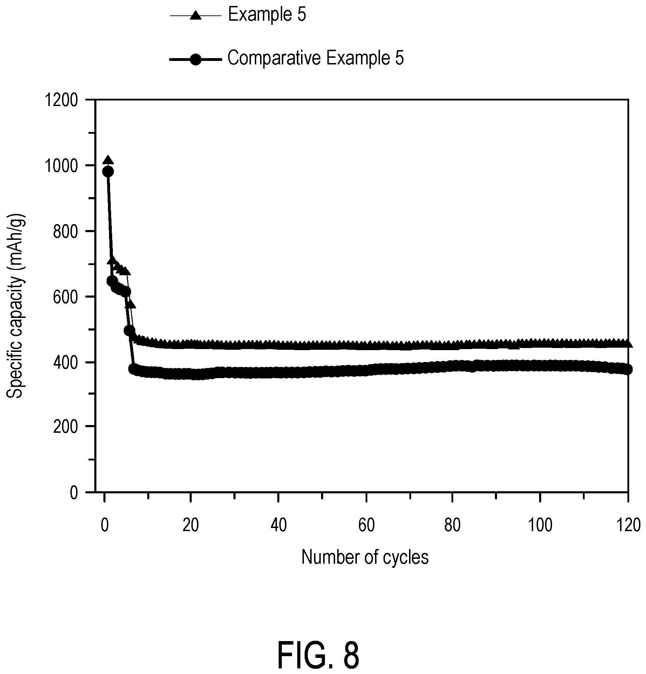

As shown in FIG. 8, compared with the secondary battery of Comparative Example 5, the secondary battery of Example 5 has better capacity and capacity retention after a high number of cycles (about 120 cycles).

Although the aforementioned test was not conducted on a secondary battery in which an anode includes a protective layer containing defective carbon, conductive carbon, nitrogen-doped carbon, or boron-doped carbon, based on the aforementioned description of the protective layer and the test results of Examples 1-5, those skilled in the art should understand that if the anode includes a protective layer containing defective carbon, conductive carbon, nitrogen-doped carbon, or boron-doped carbon, the resulting secondary battery can also have good capacity and capacity retention.

Although the aforementioned test was not conducted on a secondary battery in which an anode comprises first oxide particles M whose material is FeO, Fe₂O₃, or an iron-containing multi-element metal oxide (e.g., Al_{y}Fe_{1-y}O, Al_{y}Fe_{2-y}O₃, Al_{y}Fe_{3-y}O₄, Ti_{y}Fe_{1-y}O, Ti_{y}Fe_{2-y}O₃, Ti_{y}Fe_{3-y}O₄), based on the aforementioned description of the first oxide particles M and the test results of Examples 1 and 2, it should be understood by those skilled in the art that if the anode comprises first oxide particles M whose material is FeO, Fe₂O₃, or an iron-containing multi-element metal oxide, the resulting secondary battery can also have good capacity and capacity retention.

Although the aforementioned test was not conducted on a secondary battery in which an anode includes first oxide particles M whose material is Mn₂O₃, Mn₃O₄, MnO₂ or a manganese-containing multi-element metal oxide (e.g., Al_{y}Mn_{1-y}O, Al_{y}Mn_{2-y}O₃, Al_{y}Mn_{1-y}O₂, Al_{y}Mn_{3-y}O₄, Ti_{y}Mn_{1-y}O, Ti_{y}Mn_{2-y}O₃, Ti_{y}Mn_{1-y}O₂, Ti_{y}Mn_{3-y}O₄, Ca_{y}Mn_{1-y}O, Ca_{y}Mn_{2-y}O₃, Ca_{y}Mn_{1-y}O₂, Ca_{y}Mn_{3-y}O₄), based on the aforementioned description of the first oxide particles M and the test results of Examples 3 and 4, it should be understood by those skilled in the art that if the anode includes first oxide particles M whose material is Mn₂O₃, Mn₃O₄, MnO₂ or a manganese-containing multi-element metal oxide M, the resulting secondary battery can also have good capacity and capacity retention.

Although the aforementioned test was not conducted on a secondary battery in which an anode includes second oxide particles N whose material is SiO₂, TiO₂, CuO₂, ZnO, and MoO₃, based on the aforementioned description of second oxide particles N and the test results of Examples 1, 2, and 4, those skilled in the art should understand that if the anode included second oxide particles N whose material is SiO₂, TiO₂, CuO₂, ZnO, and MoO₃, the resulting secondary battery can also have good capacity and capacity retention.

Based on the foregoing test results, it is confirmed that by using the anode material for a secondary battery of the present invention to prepare an anode, the secondary battery to which the anode is applied can have good capacity, stability and charge-discharge cycle life.

Furthermore, compared with commercial graphite (theoretical capacity of 372 mAh/g), the secondary battery using the anode made of the anode material for a secondary battery of the present invention has a higher capacity, indicating that the anode material for a secondary battery of the present invention can effectively improve battery performance.

## Claims

1. A anode material (10, 20) for a secondary battery, comprising:
a plurality of oxide particles (12); and
a protective layer (14) covering the plurality of oxide particles (12), wherein a material of the protective layer (14) comprises carbon.

2. The anode material for the secondary battery of claim 1, wherein a thickness of the protective layer (14) is less than or equal to 20 nm.

3. The anode material for the secondary battery of claim 1, wherein the carbon includes one or more of defective carbon, conductive carbon, amorphous carbon, nitrogen-doped carbon, and boron-doped carbon.

4. The anode material for the secondary battery of claim 1, wherein the plurality of oxide particles (12) include a plurality of first oxide particles M (M), and a material of the plurality of first oxide particles M includes one or more of FeO, Fe₂O₃, Fe₃O₄, Al_{y}Fe_{1-y}O, Al_{y}Fe_{2-y}O₃, Al_{y}Fe_{3-y}O₄, Ti_{y}Fe_{1-y}O, Ti_{y}Fe_{2-y}O₃, Ti_{y}Fe_{3-y}O₄, MnO, Mn₂O₃, Mn₃O₄, MnO₂, Al_{y}Mn_{1-y}O, Al_{y}Mn_{2-y}O₃, Al_{y}Mn_{1-y}O₂, Al_{y}Mn_{3-y}O₄, Ti_{y}Mn_{1-y}O, Ti_{y}Mn_{2-y}O₃, Ti_{y}Mn_{1-y}O₂, Ti_{y}Mn_{3-y}O₄, Ca_{y}Mn_{1-y}O, Ca_{y}Mn_{2-y}O₃, Ca_{y}Mn_{1-y}O₂, Ca_{y}Mn_{3-y}O₄, and (AlₐZn_{b}Mn_{c}Fe_{d}Cuₑ)₃O₄, wherein y≤20 atomic%, each of a, b, c, d, and e is greater than or equal to 10 atomic%, and a+b+c+d+e =1.

5. The anode material for the secondary battery of claim 4, wherein (AlₐZn_{b}Mn_{c}Fe_{d}Cuₑ)₃O₄ has a spinel structure.

6. The anode material for the secondary battery of claim 4, wherein the plurality of oxide particles (12) include a plurality of second oxide particles N (N), and a material of the plurality of second oxide particles N includes one or more of SiO₂, SnO₂, TiO₂, CuO₂, CuO, CaO, ZnO and MoO₃.

7. The anode material for the secondary battery of claim 6, wherein an atomic proportion of the plurality of first oxide particles M is greater than or equal to 90 atomic %, and an atomic proportion of the plurality of second oxide particles N is less than or equal to 10 atomic %.

8. The anode material for the secondary battery of claim 6, wherein a particle size of the plurality of first oxide particles M is between greater than or equal to 20 nm and less than or equal to 20 µm, and a particle size of the plurality of second oxide particles N is between greater than or equal to 20 nm and less than or equal to 20 µm.

9. An anode (102) for a secondary battery (100), comprising:
a current collector (102a); and
an anode material layer (102b) disposed on the current collector and includes the anode material (10, 20) for the secondary battery of any one of claims 1 to 8.

10. The anode for the secondary battery of claim 9, wherein the anode material layer (102b) further comprises a conductive agent mixed with the anode material for the secondary battery.

11. The anode for the secondary battery of claim 10, wherein the conductive agent comprises carbon nanotubes, graphene, graphite or conductive carbon.

12. The anode for the secondary battery of claim 9, wherein the current collector (102a) comprises a copper foil, an aluminum foil, a molybdenum foil, a nickel foil, a molybdenum-coated copper foil, a molybdenum-coated nickel foil, a molybdenum-coated aluminum foil, a carbon nanotube-coated copper foil, a carbon nanotube-coated copper foil, a carbon nanotube-coated nickel foil, or a carbon nanotube-coated aluminum foil.

13. A secondary battery (100), comprising:
a cathode (104);
an anode (102), separately disposed from the cathode (104), wherein the anode is the anode for the secondary battery of claim 9;
an electrolyte (108), disposed between the anode (102) and the cathode (104); and
a package structure (112), covering the cathode (104), the anode (102) and the electrolyte (108).

14. The secondary battery of claim 13, further comprising a separator (106) disposed between the cathode (104) and the anode (102), and the separator (106), the cathode (104), and the anode (102) define a housing region (110), and the electrolyte (108) is disposed in the housing region (110).
